Europäisches Patentamt

European Patent Office

Office européen des brevets

(19)

(11) Numéro de publication: **0 270 416 B1**

# (12) FASCICULE DE BREVET EUROPEEN

(45) Date de publication du fascicule du brevet:
09.05.90

(51) Int. Cl.⁵: **F16D 13/71**

(21) Numéro de dépôt: **87402511.7**

(22) Date de dépôt: **06.11.87**

(54) Mécanisme d'embrayage à amortissement axial.

(30) Priorité: **07.11.86 FR 8615538**

(43) Date de publication de la demande:
**08.06.88 Bulletin 88/23**

(45) Mention de la délivrance du brevet:
**09.05.90 Bulletin 90/19**

(84) Etats contractants désignés:
**DE FR GB IT**

(56) Documents cités:
**DE-A- 2 658 744**
**FR-A- 2 250 919**
**US-A- 4 478 324**

(73) Titulaire: **VALEO, 64 Avenue de la Grande Armée,
F-75017 Paris(FR)**

(72) Inventeur: **Villata, Gino, Via Moriondo 32,
I-14021 Buttigliera d'Asti(IT)**

(74) Mandataire: **Gamonal, Didier, Société VALEO Service
Propriété Industrielle 30, rue Blanqui, F-93406 Saint
Ouen(FR)**

## Description

L'invention se rapporte à un mécanisme, notamment pour véhicule automobile, comportant une première pièce globalement annulaire, dite couvercle, par laquelle il est adapté à être fixé à un plateau, dit plateau de réaction ou volant, une deuxième pièce globalement annulaire dite plateau de pression, qui est liée en rotation au couvercle par des moyens d'attelage autorisant un déplacement axial dudit plateau de pression vis-à-vis dudit couvercle, et des moyens élastiques à action axiale qui, prenant appui sur le couvercle, agissent axialement sur le plateau, les moyens d'attelage comportant des languettes élastiquement déformables qui sont reliées par une extrémité au couvercle et par l'autre extrémité à l'une d'une pluralité de pattes en saillie radiale de la périphérie externe du plateau de pression, le couvercle étant ajouré en regard de ces pattes.

Un tel dispositif est décrit par exemple dans le document de brevet FR-A 2 250 919.

Comme le rappelle le document précédent, on a constaté que des vibrations axiales entre plateau de pression et couvercle sont susceptibles de prendre naissance lorsque le mécanisme d'embrayage est en position débrayée, sous l'effet de mouvements axiaux du vilebrequin du moteur.

L'inertie du plateau de pression et la raideur des moyens élastiques à action axiale se combinent pour constituer un système oscillant susceptible d'entrer en résonance pour une fréquence d'excitation déterminée.

Le document de brevet FR-A 2 250 919 préconise d'amortir le système oscillant par des éléments frottants solidaires du couvercle et portant élastiquement sur la périphérie du plateau de pression, éventuellement garni localement d'un matériau de friction.

Comme le centrage du plateau de pression par rapport au couvercle est maintenu par les languettes élastiques, qui sont orientées pour bien transmettre des efforts tangentiels, il en résulte que le réglage des forces de friction, par ajustement de la flexion des éléments frottants élastiques est quelque peu aléatoire, et le coefficient d'amortissement du système oscillant incertain. En outre la levée du plateau de pression peut être ainsi limitée.

Par ailleurs, l'usure des points de frottement, et la fatigue des éléments frottants élastiques entraînent des déréglages du coefficient d'amortissement dans le temps. De plus les éléments frottants sont proches de la zone du plateau de pression la plus chaude, à savoir la zone proche du disque de friction, ce qui aggrave les déréglages.

Dans le document DE-A 2 658 744 des moyens amortisseurs sont également prévus. Ces moyens sont éloignés de la zone chaude du plateau de pression et sont associés à des prolongements des éléments de fixation des languettes élastiquement déformables.

L'amortissement est obtenu par un dispositif de frottement à friction solide sur solide.

Comme dans le précédent susmentionné document FR-A 2 250 919 ces amortisseurs à friction solides sur solides manquent de linéarité, et le coefficient d'amortissement varie avec l'état instantané du système oscillant.

En outre les prolongements des éléments de fixation compliquent le montage et dans certaines dispositions il faut même prévoir une patte supplémentaire pour le plateau de pression.

L'invention a pour objet un mécanisme d'embrayage pourvu d'éléments amortisseurs stables dans le temps, faciles à monter, dont les effets amortisseurs peuvent être ajustés de façon répétitive, tout en ayant la possibilité d'équiper le mécanisme desdits éléments amortisseurs dès l'origine ou par la suite.

Dans ce but, l'invention propose un mécanisme d'embrayage, notamment pour véhicule automobile, comportant une première pièce globalement annulaire dite couvercle, par laquelle il est adapté à être fixé à un plateau, dit plateau de réaction ou volant, une deuxième pièce globalement annulaire, dite plateau de pression, qui est liée en rotation au couvercle par des moyens d'attelage autorisant un déplacement axial dudit plateau de pression vis-à-vis dudit couvercle et des moyens élastiques à action axiale qui, prenant appui sur le couvercle, agissent axialement sur le plateau de pression dans un sens où celui-ci s'écarte dudit couvercle, les moyens d'attelage comportant, d'une part, des moyens amortisseurs et, d'autre part, des languettes élastiquement déformables qui sont reliées par une extrémité au couvercle et par l'autre extrémité à l'une d'une pluralité de pattes en saillie radiale de la périphérie externe du plateau de pression, le couvercle étant ajouré en regard de ces pattes, caractérisé en ce que les moyens amortisseurs sont constitués chacun d'un bloc d'élastomère à frottement interne solidarisé par deux faces en regard à deux armatures solidaires respectivement d'une patte et du couvercle et capables d'un déplacement relatif axial.

Grâce à l'invention les moyens amortisseurs peuvent équiper dès l'origine le mécanisme, ou être montés par la suite sur un mécanisme existant lors du reconditionnement de celui-ci. En particulier l'une des armatures peut être fixée au couvercle en même temps que les languettes, tandis que l'autre est fixée à la patte du plateau de pression, cette disposition ne nécessitant pas la formation de pattes supplémentaires dans le plateau de pression comme à la figure 2 du susmentionné document DE-A 2 658 744.

En outre le bloc d'élastomère est pris entre deux armatures, la liaison du bloc aux armatures pouvant par exemple être exécutée par adhérisation en sorte que les moyens amortisseurs forment des ensembles aisément montables contrairement aux dispositions du sumentionné document DE-A 2 658 744 dans lesquelles les prolongements épaulés des éléments de fixation compliquent le montage.

On sait qu'une propriété importante des élastomères est de présenter un comportement en déformation analogue au comportement d'un fluide visqueux, à savoir des déformations à volume sensiblement constant, et une réponse aux déformations par une absorption d'énergie, par frottement interne de type visqueux.

On sait également que, pour que le coefficient d'amortissement d'un système oscillant soit indépendant de l'amplitude d'oscillation, il faut que la force amortissante soit proportionnelle à la vitesse instantanée d'oscillation du système, ce qui correspond à un comportement visqueux.

Aussi les éléments amortisseurs qui comprennent un bloc élastomère entre deux armatures sont capables d'étouffer la création d'oscillations entre plateau de pression et couvercle de façon répétible, et ajustable par le choix de la nature et de la nuance de l'élastomère dont est constitué le bloc. En choisissant en outre un élastomère peu sensible au vieillissement, on obtiendra des effets d'amortissement stables dans le temps.

On remarquera en outre que l'effet amortisseur, qui entraîne un échauffement dans la masse de l'élastomère par suite de l'absorption de l'énergie d'oscillation, est limité aux moments, relativement courts, où le mécanisme d'embrayage est en position débrayée. L'échauffement interne est ainsi peu important, d'autant que les éléments amortisseurs sont en regard des ajours du couvercle qui laissent apparaitre les pattes du plateau de pression et sont ainsi ventilés par la rotation du mécanisme d'embrayage.

De préférence la capacité de déplacement relatif axial entre les armatures est au moins égales à celle qu'autorisent les languettes, au moins dans le sens où le plateau de pression se rapproche du couvercle. Un embrayage classique peut être muni d'amortisseurs à bloc d'élastomère sans que ses caractéristiques de débrayage soient altérées.

Les blocs d'élastomère peuvent être conformés, au repos, en sorte de coopérer, au moins sur la majeure partie de la course du plateau de pression, au rappel de celui-ci en direction du couvercle, ce rappel étant assuré principalement par les languettes ou des organes élastiques de rappel, afin d'assurer que le plateau de pression est écarté du disque de friction en position débrayée.

De préférence également les armatures sont conformées en sorte de venir en butée réciproque en fin de déplacement axial du plateau de pression, dans le sens où celui-ci s'écarte du couvercle.

Cette disposition permet de résoudre un problème technologique qui est la protection des languettes pendant les périodes de stockage des mécanismes d'embrayage.

En effet, comme le plateau de pression est prévu pour porter sur une face d'un disque d'embrayage dont l'autre face est appliquée sur le plateau de réaction ou volant, lorsque le mécanisme d'embrayage est stocké sans comporter le disque d'embrayage et le plateau de réaction, le plateau de pression n'est maintenu, dans le sens où ce plateau de pression s'écarte du couvercle, que par la résistance à la flexion des languettes. Or le plateau de pression est sollicité en écartement par rapport au couvercle par les moyens élastiques à action axiale en permanence, et par la réaction aux chocs du mécanisme, chocs inévitables en stockage industriel.

On notera que ce problème technologique de stockage avait reçu de solutions indépendantes dans le passé, en montant des moyens de butée pour limiter la course du plateau de pression. On trouvera une description de tels moyens de butée, par exemple, dans le document de brevet FR-A 2 562 619.

D'autres caractéristiques et avantages de l'invention ressortiront d'ailleurs de la description qui va suivre à titre d'exemple, en référence aux dessins annexés dans lesquels:

La figure 1 est une vue latérale d'un mécanisme d'embrayage selon l'invention, avec le plateau de pression en position débrayée;

La figure 2 est une vue analogue à celle de la figure 1 où le plateau de pression est en position embrayée;

La figure 3 est une vue analogue à celle des figures 1 et 2, où le plateau de pression est en position dite de stockage;

La figure 4 est une vue latérale d'un mécanisme d'embrayage selon une variante de l'invention;

La figure 5 est une vue latérale d'un mécanisme d'embrayage selon une autre variante de l'invention.

Selon une disposition bien connue, sur les détails de laquelle il n'est pas nécessaire de s'étendre, un mécanisme d'embrayage comporte une première pièce globalement annulaire 10, dite couvercle, qui se fixe sur un plateau de réaction ou volant d'un moteur de véhicule automobile, suivant une face 16, plane radiale, par l'intermédiaire d'un rebord 21.

A l'intérieur du couvercle 10 est disposé un plateau de pression 11 dans son ensemble globalement annulaire et muni de pattes 22 qui font saillie de sa périphérie à espacement angulaire régulier. Les pattes 22 du plateau 11 débordent à l'extérieur du couvercle 10, ajouré en correspondance, les ajours étant bordés par un auvent 23 qui interrompt le rebord 21 du couvercle, et définit des plages planes radiales 37 et 37′, symétriques.

Entre le couvercle 10 et le plateau 11 sont disposés des moyens élastiques à action axiale, du genre d'une rondelle élastique dite diaphragme, invisible sur les figures, et de ce fait non référencé. Ces moyens élastiques prennent appui sur une paroi terminale 19 du couvercle 10, celui-ci comportant le plus souvent des embouts à cet effet, pour solliciter le plateau de pression 11 suivant l'axe du mécanisme d'embrayage, dans le sens où le plateau de pression il s'écarte du couvercle 10, c'est-à-dire vers le bas dans la représentation des figures.

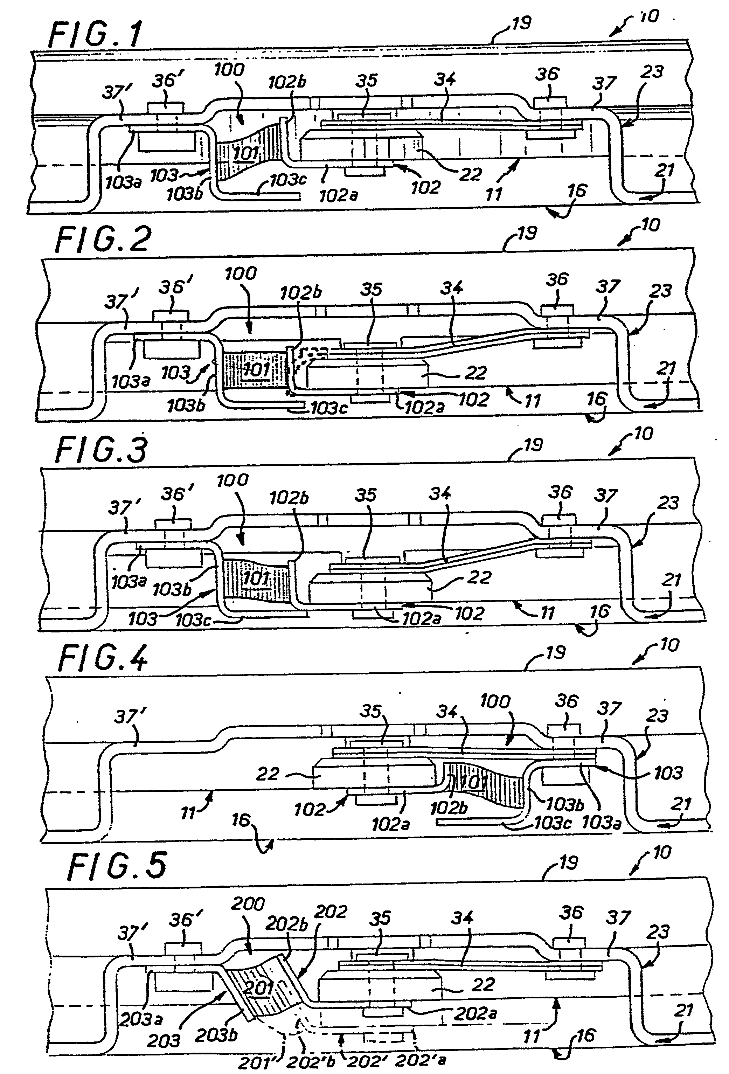

Le plateau de pression 11 est entraîné en rotation par le couvercle 10 par l'intermédiaire de moyens d'attelage 34, constitués ici de languettes élastiquement déformables disposées en orientation tangentielles et qui sont rivées d'une part au couvercle 10 sous la plage 37 par un rivet 36 et d'autre part au-dessus de la patte 22 par un rivet 35. La flexion des languettes, perpendiculairement à leur plan général, autorise un déplacement axial du plateau 11 (comparer les figures 1 à 3) tout en maintenant l'entraînement tangentiel.

Les expressions "sous la plage" et "sur la patte" doivent s'entendre ici par rapport à l'orientation du couvercle 10 sur les figures, pour des raisons de commodité de description, sans que ces expressions impliquent en quoi que ce soit une orientation particulière du couvercle lors de son montage sur un plateau de réaction, dans la réalité.

Selon le mode de réalisation de l'invention représenté aux figures 1 à 3, le mécanisme d'embrayage est muni d'amortisseurs de vibrations axiales 100, appairés avec les languettes 34. L'amortisseur 100 est constitué d'un bloc d'élastomère 101, sensiblement parallélépipédique au repos, comme représenté figure 2. Ce bloc 101 est pris entre deux armatures 102 et 103, formées de bandes de métal, la liaison du bloc aux armatures étant exécutée par adhérisation. L'armature 102 est pliée en équerre à deux branches, une première branche 102a rivée sous la patte 22 du plateau 11 par le même rivet 35 que les languettes 34, et une seconde branche 102b sur laquelle est fixé par un côté le bloc 101 d'élastomère.

L'armature 103 est pliée deux fois en équerre, en définissant trois branches. La première branche 103a est rivée au couvercle 10 sous la plage 37', par un rivet 36, symétrique du rivet 36 par rapport au plan médian de la patte 22; la deuxième branche 103b fait face à la branche 102b de l'armature 102, et le bloc 101 lui est fixé également.

La troisième branche 103c de l'armature 103 est parallèle à la première et se raccorde à la deuxième branche 103b à l'opposé de la première branche 103a. Cette troisième branche s'étend dans la même direction que le bloc d'élastomère 101, et sur une longueur suffisante pour que la première branche 102a de l'armature 102 vienne buter sur elle en fin de course axiale du plateau de pression 11, comme représenté figure 3.

Sur la figure 1, le plateau 11 est en position débrayée, où il est proche du fond 19 du couvercle 10, le diaphragme étant rétracté sous l'action d'un moyen de commande de débrayage, par exemple une butée de débrayage. Dans cette position le bloc d'élastomère est mis en élongation oblique. C'est dans cette position que le plateau 11 est susceptible d'entrer en oscillation axiale par rapport au couvercle 10. On remarquera que la déformation statique du bloc d'élastomère 101 lui communique une forme où un déplacement relatif faible des armatures 102 et 103 dans une direction axiale induit des déformations relativement élevées du bloc d'élastomère 101, ce qui est favorable à un amortissement efficace.

Sur la figure 2, le plateau de pression 11 est représenté dans la position qu'il aurait en position embrayée avec un disque de friction neuf, la distance entre la plan de friction du plateau 11 et la face 16 du couvercle correspondant à l'épaisseur du disque de friction. Dans cette position du plateau de pression 11, le bloc 101 est sensiblement dans sa forme parallélépipédique de repos.

On notera que, lorsque les garnitures du disque de friction s'usent, le plateau de pression s'éloigne du fond 19 du couvercle, ce qui entraîne une déformation du bloc dans le sens qui favorise le rappel du plateau de pression au début de l'opération de débrayage, en coopération avec les languettes.

La position du plateau de pression 11 représentée à la figure 3 correspond à la portion que prend ce plateau, lorsque le couvercle 10 n'est pas fixé sur un volant, c'est-à-dire en stockage. Comme la première branche 102a de l'armature 102 repose sur l'extrémité de la troisième branche 103c de l'armature 103, l'écartement du plateau de pression 11 par rapport au couvercle 10 est limité, et les languettes 34 ont un débattement de flexion limité, et ne risquent pas de subir des déformations permanentes préjudiciables à la bonne tenue du mécanisme d'embrayage.

Dans la variante représentée figure 4, l'amortisseur 100 a, à peu de choses près, la même structure que celui des figures 1 à 3. Mais si l'armature 102 est toujours fixée par sa première branche 102a sous la patte 22 du plateau 11 par le même rivet 35 qui y fixe les languettes 34, l'armature 103 est fixée par sa première branche 103a directement sous les languettes 34 par le rivet 36 qui fixe ces languettes sur la plage 37 du couvercle 10.

Le fonctionnement de l'amortisseur est éventuellement le même que celui des figures 1 à 3, et la troisième branche 103c de l'armature 103 vient faire butée pour la première branche 102a de l'armature 102, pour limiter la course axiale du plateau de pression 11.

Mais par ailleurs, la fixation de l'amortisseur 100 emprunte strictement les mêmes organes de fixation, rivets 35 et 36, des languettes 34 et se loge sous celles-ci, ce qui permet de limiter angulairement l'ajourage du couvercle 10 pour le dégagement des pattes 22 du plateau de pression 11.

Il est également possible de former dans le couvercle un auvent plus court, en supprimant la plage 37'.

En variante de la disposition précédente, il est possible de fixer l'armature 103 de l'autre côté de la plage 37, c'est-à-dire au-dessus de celle-ci avec la convention de sens définie précédemment. L'armature 102 est alors fixée à l'extrémité d'un prolongement du rivet 35, qui s'étend au-dessus de l'auvent. La branche 103c de l'armature 103 peut être supprimée, car la limitation de l'écartement du plateau 11 par rapport au couvercle 19 est obtenue par butée de la branche 102a de l'armature 102.

Dans la variante représentéee figure 5, la disposition des fixations de l'amortisseur 200 respectivement sur la patte 22 du plateau de pression 11 et sur la plage 37' du couvercle 10 est la même que celle de l'amortisseur 100 aux figures 1 à 3. Les armatures 202 et 203 présentent la forme d'équerres pliée à angle obtus à deux branches, premières branches de fixation 202a et 203a, et seconde branche porteuse de bloc d'élastomère 201, 202b et 203b. Ces secondes branches 202b et 203b sont parallèles, et en biais par rapport à une direction axiale, de sorte que la branche 202b se rapproche de la branche 203b lorsque le plateau 11 se déplace en direction axiale, dans le sens où il s'écarte du couvercle de la face 19 du couvercle 10.

Il s'ensuit que la réaction du bloc d'élastomère à la déformation croît rapidement lorsque le plateau 11 vient en fin de course axiale en s'écartant du couvercle 10. Lorsque l'armature 202 fixée sous la patte 22 du plateau de pression 11 vient en position 202', représentée en pointillé, le bloc d'élastomère 201 prend une forme représentée en pointillé 201', avec son centre fortement comprimé entre les armatures 203 et 202'. Sa course axiale du plateau de pression 11 est ainsi limitée dans le sens où il s'écarte du couvercle 10. Mais par ailleurs le bloc 201 joue son rôle d'amortisseur sensiblement dans les mêmes conditions que le bloc 101 de la figure 1, lorsque le plateau 11 est en position débrayée.

On appréciera que le bloc travaille en cisaillement dans de bonnes conditions.

On appréciera également que la détente du bloc 201 lors du débrayage sollicite le plateau 11 en rapprochement du couvercle, coopérant ainsi avec les languettes élastiques.

On remarquera que, dans toutes les dispositions précédentes, il est possible de préformer les blocs d'élastomère au repos de telle sorte que le rappel du plateau de pression 11 vers le couvercle sous l'effet élastique des languettes soit aidé par les blocs, au moins sur la majorité de la course du plateau de pression.

Par ailleurs, il est clair que le rappel du plateau de pression vers le couvercle peut être provoqué, de façon principale, par des crochets de rappel, les languettes élastiques et les blocs formant alors moyens de rappel auxiliaires.

Il va de soi qu'il n'est pas nécessaire que des moyens amortisseurs soient associés à toutes les languettes.

Il va également de soi que, bien que les mécanismes d'embrayage aient été décrits dans des dispositions où les moyens élastiques à action axiale sont des diaphragmes, ils peuvent être associés avec des moyens élastiques différents, par exemple des ressorts à boudin coopérant avec des leviers de débrayage.

Ainsi qu'il ressort à l'évidence de la description les moyens amortisseurs selon l'invention peuvent équiper dès l'origine le mécanisme, ou être montés par la suite sur un mécanisme existant lors du reconditionnement de celui-ci.

Bien entendu, l'invention n'est par limitée aux exemples décrits, en particulier à la figure 1 il est possible de fixer l'armature 102 de l'autre côté de la patte 22, c'est-à-dire au dessus de celle-ci avec la convention de sens définie précédemment, en la retournant. Ainsi, la branche 102a peut être rivée sur la patte 22 au contact des languettes 34 par le même rivet 35. Dans ce cas la seconde branche 102b est admise par sa tranche d'extrémité à venir en contact, en position de stockage, avec la branche 103c.

Comme représenté en pointillés à la figure 2, l'armature 102 peut être d'un seul tenant avec les languettes 34 en forme de bande. Plus précisément, comme visible à la figure 2, deux languettes superposées relient la plage 37 à la patte 22, l'armature 102 étant alors monobloc avec la languette 34 adjacente à la patte 22, l'autre languette pouvant être prolongée circonférentiellement pour rigidification de l'armature. L'inverse est également possible et les deux languettes peuvent former l'armature. On notera que la seconde branche 102b, d'orientation globalement axiale, est formée par pliage des languettes avant traitement thermique de celle-ci.

Enfin, l'auvent et l'ajour peuvent être du type de celui décrit dans la demande de brevet FR-A 2 564 546. Comme déja mentionné il est alors possible de fixer une armature au dessus de la patte de fixation, l'autre étant alors fixée par le rivet de fixation des languettes. Dans ce cas la branche 103c de l'armature peut être supprimée car la limitation de l'écartement du plateau par rapport au couvercle est obtenue, par butée de la projection renflée du rivet contre la patte de retenue. Enfin, l'embrayage peut être du type tiré ou poussé.

## Revendications

1. Mécansime d'embrayage, notamment pour véhicule automobile, comportant une première pièce globalement annulaire (10), dite couvercle, par laquelle il est adapté à être fixé à un plateau, dit plateau de réaction ou volant, une deuxième pièce globalement annulaire (11), dite plateau de pression, qui est liée en rotation au couvercle (10) par des moyens d'attelage autorisant un déplacement axial dudit plateau de pression (11) vis-à-vis dudit couvercle (10), et des moyens élastiques à action axiale qui, prenant appui sur le couvercle (10), agissent axialement sur le plateau de pression dans un sens où celui-ci s'écarte dudit couvercle (10), les moyens d'attelage comportant, d'une part, des moyens amortisseurs (100, 200) et, d'autre part, des languettes (34) élastiquement déformables, qui sont reliées par une extrémité au couvercle (10) et par l'autre extrémité à l'une d'une pluralité de pattes (22) en saillie radiale de la périphérie externe du plateau de pression (11), le couvercle (10) étant ajouré en regard de ces pattes (22), caractérisé en ce que les moyens amortisseurs (100, 200) sont constitués chacun d'un bloc d'élastomère (101, 201) à frottement interne solidarisé par deux faces en regard à deux armatures (102, 103; 202, 203) solidaires respectivement d'une patte (22) et du couvercle (10) et capables d'un déplacement relatif axial.

2. Mécanisme d'embrayage selon la revendication 1, caractérisé en ce que les armatures (102, 103; 202, 203) sont fixées directement à la patte (22) et au couvercle (10).

3. Mécanisme d'embrayage selon l'une des revendications 1 et 2, caractérisé en ce que la capacité de déplacement relatif axial entre les armatures (102, 103; 202, 203) est au moins égale à celle qu'autorisent lesdites languettes (34) au moins dans le sens où le plateau de pression (11) se rapproche du couvercle (10).

4. Mécanisme d'embrayage selon l'une des revendications 1 à 3, caractérisé en ce que lesdites armatures (102, 103; 202, 203) sont conformées en sorte de venir en butée réciproque en fin de déplacement axial du plateau de pression (11) dans le sens où celui-ci s'écarte du couvercle (10).

5. Mécanisme d'embrayage selon l'une quelconque des revendications 1 à 4, caractérisé en ce que lesdites armatures (102, 103; 202, 203) sont des bandes pliées en équerre à deux branches, une première branche (102a, 103a; 202a, 203a) étant apte à être fixée sur une surface plane sensiblement radiale, appartenant respectivement à une patte (22) du plateau de pression et à une plage (37, 37') du couvercle (10), tandis que les deuxièmes branches (102b, 103b; 202b, 203b) se font face et sont réunies par ledit bloc élastomère (101, 201).

6. Mécanisme d'embrayage selon la revendication 5, caractérisé en ce que l'armature (103) dont la première branche (103a) est apte à être rivée sur une plage (37, 37') du couvercle (10) présente une troisième branche (103c), parallèle à la première, qui se raccorde à la seconde branche (103b) à l'opposé de la première (103a) et s'étend dans la même direction que le bloc d'élastomère (101), sur une longueur suffisante pour que l'autre armature (102) vienne buter sur elle en fin de déplacement axial du plateau de pression (11) dans le sens où celui-ci s'écarte du couvercle (10).

7. Mécanisme d'embrayage selon l'une des revendications 5 et 6, caractérisé en ce que lesdites premières branches des deux armatures (102, 103) sont rivées sur les surfaces radiales respectives de pattes (22) du plateau de pression (11) et de plage (37) de couvercle (10) par les mêmes moyens de rivetage (35, 36) que les languettes (34).

8. Mécanisme d'embrayage selon la revendication 5, caractérisé en ce que lesdites armatures (202, 203) sont pliées en forme d'équerre à angle obtus avec leurs deuxièmes branches (202b, 203b), entre lesquelles est fixé ledit bloc d'élastomère (201), sensiblement parallèles, ce bloc (201) étant ainsi comprimé entre les armatures (202, 203) en fin de déplacement axial du plateau de pression (11), dans le sens où celui-ci s'écarte du couvercle (10).

9. Mécanisme d'embrayage, selon la revendication 5, caractérisé en ce que l'une des armatures (102) est d'un seul tenant avec les languettes (34).

10. Mécanisme d'embrayage selon l'une quelconque des revendications 1 à 9, caractérisé en ce que ledit bloc d'élastomère (101, 201) est conformé au repos en sorte de coopérer, au moins sur une partie majeure de la course du plateau de pression (11), au rappel de celui-ci en direction dudit couvercle (10).

**Claims**

1. A clutch mechanism, in particular for an automotive vehicle, comprising a generally annular first member (10), referred to as a cover plate, by which it is adapted to be fixed to a plate referred to as a reaction plate or flywheel, a generally annular second member (11), referred to as a pressure plate, which is coupled to the cover plate (10), for rotation therewith, through attachment means adapted to allow axial displacement of the said pressure plate (11) with respect to the said cover plate (10), and axially acting resilient means which, bearing on the cover plate (10), act axially on the pressure plate in a direction such as to displace the latter away from the said cover plate (10), the attachment means comprising, firstly, damping means (100, 200) and, secondly, resiliently deformable tongues (34) which are connected through one of their ends to the cover plate (10) and through the other end to one of a plurality of pads (22) which project radially from the outer periphery of the pressure plate (11), the cover plate being perforated where it faces the said pads (22), characterised in that each of the damping means (100, 200) comprises an elastomeric block (101, 201) having internal friction, which is fixed by means of two of its faces, and in facing relationship, to two armatures (102, 103; 202, 203) which are fixed respectively to a said pad (22) and to the cover plate (10), and which are arranged so as to allow axial displacement of one armature with respect to the other.

2. A clutch mechanism according to Claim 1, characterised in that the armatures (102, 103; 202, 203) are fixed directly to the pad (22) and to the cover plate (10).

3. A clutch mechanism according to one of Claims 1 and 2, characterised in that the capacity for relative axial displacement between the armatures (102, 103; 202, 203) is at least equal to that permitted by the said tongues (34), at least in the same direction as that in which the pressure plate (11) approaches the cover plate (10).

4. A clutch mechanism according to one of Claims 1 to 3, characterised in that the said armatures (102, 103; 202, 203) are so shaped that they come into abutting engagement at the end of axial displacement of the pressure plate (11) in the direction in which the latter is displaced away from the cover plate (10).

5. A clutch mechanism according to any one of Claims 1 to 4, characterised in that the said armatures (102, 103; 202, 203) are in the form of strips bent at right angles to form two branches, whereof a first branch (102a, 103a; 202a, 203a) is adapted to be fixed on a substantially radial flat surface, which is formed, respectively, on a pad (22) of the pressure plate and on a portion (37, 37') of the cover plate (10), while the second ones of the said branches (102b, 103b; 202b, 203b) are arranged facing each other and are connected together by means of the said elastomeric block (101, 201).

6. A clutch mechanism according to Claim 5, characterised in that one of the armatures (103) of which the first branch (103a) is adapted to be riveted on a said portion (37, 37') of the cover plate (10), has a third branch (103a), which is parallel to its first branch and connected with its second branch (103b) on the opposite side of the latter from the first branch (103a), and which extends in the same direction as the elastomeric block (101), over a length sufficient to allow the other armature (102) to come into abutting engagement on it at the end of the axial displacement of the pressure plate (11) in the direction in which the latter is displaced away from the cover plate (10).

7. A clutch mechanism according to one of Claims 5 and 6, characterised in that the said first branches of the two armatures (102, 103) are riveted on the respective radial surfaces of the said pads (22) of the pressure plate (11) and of a said portion (37) of the cover plate (10), by means of the same riveting means (35, 36) as the tongues (34).

8. A clutch mechanism according to Claim 5, characterised in that the said armatures (202, 203) are bent to form an L-shape defining acute angles with their second branches (202b, 203b), between which the said elastomeric block (201) is fixed, the second branches being substantially parallel to each other, the said block (210) being thus compressed between the armatures (202, 203) at the end of axial displacement of the pressure plate (11) in the direction in which the latter is displaced away from the cover plate (10).

9. A clutch mechanism according to Claim 5, characterised in that one of the armatures (102) is secured fast to the tongues (34).

10. A clutch mechanism according to any one of Claims 1 to 9, characterised in that the said elastomeric block (101, 201) is shaped in the unstressed state in such a way as to cooperate, at least over a major portion of the travel of the pressure plate (11), in the return of the latter towards the cover plate (10).

**Patentansprüche**

1) Kupplungsvorrichtung, insbesondere für ein Kraftfahrzeug, bestehend aus einem ersten, im wesentlichen ringförmigen Teil (10), dem sogenannten Deckel, mit dessen Hilfe sie sich an einer Platte, der sogenannten Gegendruckplatte oder dem Schwungrad, befestigen läßt, einem zweiten, im wesentlichen ringförmigen Teil (11), der sogenannten Druckplatte, die mit dem Deckel (10) drehbar durch Kopplungsmittel verbunden ist, welche eine axiale Verschiebung der genannten Druckplatte (11) im Verhältnis zum genannten Deckel (10) erlauben, und axial wirkenden elastischen Mitteln, die auf dem Deckel (10) aufliegen und axial auf die Druckplatte in einer Richtung einwirken, in der sich diese vom genannten Deckel (10) entfernt, wobei die Kopplungsmittel einerseits Dämpfungsmittel (100, 200) und andererseits elastisch verformbare Zungen (34) aufweisen, die mit einem Ende an dem Deckel (10) und mit dem anderen Ende an einer von einer Vielzahl von Laschen (22) verbunden sind, die radial am äußeren Kreisumfang der Druckplatte (11) vorspringen, wobei der Deckel (10) gegenüber diesen Laschen (22) durchbrochen ist, dadurch gekennzeichnet, daß die Dämpfungsmittel (100, 200) jeweils aus einem Elastomerblock (101, 201) mit Innenreibung bestehen, der durch zwei Flächen gegenüber zwei Bügeln (102, 103; 202, 203) fest verbunden ist, die jeweils fest mit einer Lasche (22) und mit dem Deckel (10) verbunden sind und eine relative Bewegung in axialer Richtung erlauben.

2. Kupplungsvorrichtung nach Anspruch 1, dadurch gekennzeichnet, daß die Bügel (102, 103; 202, 203) unmittelbar an der Lasche (22) und an dem Deckel (10) befestigt sind.

3. Kupplungsvorrichtung nach einem der Ansprüche 1 und 2, dadurch gekennzeichnet, daß die Möglichkeit zur relativen Verschiebung in axialer Richtung zwischen den Bügeln (102, 103; 202, 203) wenigstens gleich derjenigen ist, die die genannten Zungen (34) wenigstens in der Richtung zulassen, in der sich die Druckplatte (11) dem Deckel (10) nähert.

4. Kupplungsvorrichtung nach einem der Ansprüche 1 bis 3, dadurch gekennzeichnet, daß die genannten Bügel (102, 103; 202, 203) so ausgebildet sind, daß sie am Ende der axialen Verschiebung der Druckplatte (11) in der Richtung, in der sich diese von dem Deckel (10) entfernt, aneinander anschlagen.

5. Kupplungsvorrichtung nach einem der Ansprüche 1 bis 4, dadurch gekennzeichnet, daß die genannten Bügel (102, 103; 202, 203) Bänder sind, die zu einem zweiarmigen Bügel umgebogen sind, wobei ein erster Arm (102$\underline{a}$, 103$\underline{a}$; 202$\underline{a}$, 203$\underline{a}$) zur Befestigung an einer im wesentlichen radialen, ebenen Fläche geeignet ist, die zu einer Lasche (22) der Druckplatte bzw. zu einer Fläche (37, 37′) des Deckels (10) gehört, während die zweiten Arme (102$\underline{b}$, 103$\underline{b}$; 202$\underline{b}$, 203$\underline{b}$) einander gegenüberliegen und durch den genannten Elastomerblock (101, 201) miteinander verbunden sind.

6. Kupplungsvorrichtung nach Anspruch 5, dadurch gekennzeichnet, daß der Bügel (103), dessen erster Arm (103$\underline{a}$) an eine Fläche (37, 37′) des Deckels (10) angenietet werden kann, einen dritten Arm (103$\underline{c}$) aufweist, der parallel zum ersten verläuft und der mit dem zweiten Arm (103$\underline{b}$) gegenüber dem ersten Arm (103$\underline{a}$) verbunden ist und sich in der gleichen Richtung erstreckt wie der Elastomerblock (101), und zwar über eine Länge, die ausreicht, damit der andere Bügel (102) am Ende der axialen Verschiebung der Druckplatte (11) in der Richtung, in der sich diese von dem Deckel (10) entfernt, daran anschlägt.

7. Kupplungsvorrichtung nach einem der Ansprüche 5 und 6, dadurch gekennzeichnet, daß die genannten ersten Arme der beiden Bügel (102, 103) an die jeweiligen radialen Flächen von Laschen (22) der Druckplatte (11) und der Fläche (37) des Deckels (10) durch die gleichen Nietmittel (35, 36) wie die Zungen (34) angenietet sind.

8. Kupplungsvorrichtung nach Anspruch 5, dadurch gekennzeichnet, daß die genannten Bügel (202, 203) in einem spitzen Winkel mit den zweiten Armen (202$\underline{b}$, 203$\underline{b}$) im wesentlichen parallel gebogen sind, zwischen denen der genannte Elastomerblock (201) befestigt ist, wobei dieser Block (201) somit zwischen den Bügeln (202, 203) am Ende der axialen Verschiebung der Druckplatte (11) in der Richtung, in der sich diese von dem Deckel (10) entfernt, zusammengedrückt wird.

9. Kupplungsvorrichtung nach Anspruch 5, dadurch gekennzeichnet, daß einer der Bügel (102) aus einem Stück mit den Zungen (34) besteht.

10. Kupplungsvorrichtung nach einem der Ansprüche 1 bis 9, dadurch gekennzeichnet, daß der genannte Elastomerblock (101, 201) in Ruhestellung so ausgebildet ist, daß er wenigstens über einen größeren Teil des Hubweges mit der Druckplatte (11) zusammenwirkt, wenn diese in Richtung auf den genannten Deckel (10) zurückgeholt wird.

*FIG.1*

*FIG.2*

*FIG.3*

*FIG.4*

*FIG.5*